# EUROPÄISCHE PATENTANMELDUNG

(11) **EP 1 925 462 A2**
(43) Veröffentlichungstag der Anmeldung: **28.05.2008**
(21) Anmeldenummer: 07022302.9
(22) Anmeldetag: 16.11.2007
(51) Int. Cl.: B44C 1/22, B44C 3/00

(54) **Verfahren zum Erzeugen von Farb-Informationen, z.B. Motiven, auf einem Träger, insbesondere aus Glas**

(30) Priorität: 23.11.2006 DE 102006055186
(71) Anmelder: Fleischle, Rudolf, 74336 Brackenheim (DE)
(72) Erfinder: Fleischle, Rudolf, 74336 Brackenheim (DE)
(74) Vertreter: Kratzsch, Volkhard

(57) **Zusammenfassung**

Die Erfindung betrifft ein Verfahren zum Erzeugen von Farb-Informationen, z. B. Motiven, auf einem Träger (16), insbesondere aus Glas, bei dem eine keramische Farbe (17) auf eine Seite des Trägers (14) vollflächig aufgetragen wird. Bei diesem Verfahren richtet man nach dem Trocknen der Farbe (17) mindestens einen Hochenergiestrahl (15) auf die Farbe und entfernt oder fixiert damit die Farbe (17) entsprechend der zu erzeugenden Information teilweise.

## Beschreibung

Die Erfindung bezieht sich auf ein Verfahren zum Erzeugen von Farb-Informationen, z. B. Motiven, auf einem Träger, insbesondere aus Glas, bei dem eine keramische Farbe auf eine Seite des Trägers vollflächig aufgetragen wird.

Es ist bekannt, im Siebdruckverfahren Farben auf einen Träger aufzutragen und hierbei Strukturen, z. B. Motive, zu bilden. Die Vorteile des bekannten Siebdruckverfahrens sind allgemein anerkannt. Nachteilig bei diesem Verfahren ist allerdings, dass man sehr kostenaufwendige Druckschablonen benötigt, die im Übrigen nur eine relativ kurze Standzeit haben. Aufwendig ist ferner das erforderliche Reinigen der Siebe, wodurch im Übrigen die Umwelt belastet wird. Auch die bei Siebdruckmaschinen nötigen langen Rüstzeiten sind von Nachteil. Fehldrucke lassen sich nicht völlig ausschließen. Beim Drucken von Motiven mit verschiedenen Farbtönen ergeben sich häufig Genauigkeitsprobleme, da die Farbtöne nicht immer exakt und ohne Versatz aufeinanderpassen.

Der Erfindung liegt die Aufgabe zugrunde, ein Verfahren zum Erzeugen von Farb-Informationen, z. B. Motiven, auf einem Träger, insbesondere aus Glas, zu schaffen, welches die Nachteile des Siebdruckverfahrens in vielerlei Hinsicht vermeidet.

Die Aufgabe ist bei einem Verfahren der eingangs genannten Art gemäß der Erfindung durch die Merkmale im Anspruch 1 gelöst. Weitere besondere Erfindungsmerkmale sowie vorteilhafte Ausgestaltungen dieses Verfahrens ergeben sich aus den Ansprüchen 2 bis 14.

Bei dem Verfahren gemäß der Erfindung kommen als Farben keramische, Quarzpartikel enthaltende, vorzugsweise wasserlösliche, Farben zur Anwendung. Diese Farben werden vollflächig auf den Träger aufgetragen, wobei es dank des Verfahrens gemäß der Erfindung möglich ist, Motive auf den Träger aufzubringen. Das vollflächige Auftragen der Farbe auf den Träger kann wesentlich schneller und kostengünstiger als im Siebdruckverfahren erfolgen. Nachdem die aufgetragene Farbe mittels Wärmebeaufschlagung getrocknet ist, befindet sich die Farbschicht in einem Zustand, in dem diese leicht vom Träger abgekratzt werden kann. Da die keramische Farbe Quarzpartikel enthält, ist ein solches mechanisches Beseitigen der Farbe vom Träger, um dadurch Motive zu erzeugen, nicht möglich; denn aufgrund der in der keramischen Farbe enthaltenen Quarzpartikel werden etwaige zum versuchsweisen Entfernen verwendete Werkzeuge sogleich stumpf und schadhaft. Auch ist nicht ausgeschlossen, dass der insbesondere aus Glas bestehende Träger zerkratzt wird und Schaden nimmt. Die Erfindung beruht auf der Erkenntnis, dass man einen mit keramischer Farbe bedruckten Träger, insbesondere aus Glas, nach dem Trocknen der Farbe in der Weise teilweise entschichten kann, dass man auf die Farbe mindestens einen Hochenergiestrahl, insbesondere Energiestrahl eines Lasers, richtet, der auf die jeweilige Stelle des Trägers fokussiert wird, an dem die Farbe durch diesen Hochenergiestrahl entfernt werden soll. Aufgrund der Wirkung des mindestens einen Hochenergiestrahls wird die Farbe an der beaufschlagten Stelle in Pulver verwandelt, das sich vom Träger löst, so dass man dieses Pulver durch Abblasen, Absaugen od. dgl. entfernen kann, ohne dabei die restlichen, am Träger haftenden Farbbereiche zu beschädigen oder vom Träger abzulösen. Durch entsprechende Steuerung des Hochenergiestrahles lassen sich somit durch teilweises Entfernen der Farbe Farb-Informationen, z. B. Schriftzüge, Bilder od. dgl., schnell, einfach und kostengünstig erzeugen. Es lassen sich nahezu beliebige Motive herstellen, auch mehrschichtige. Das erfindungsgemäße Verfahren hat verglichen mit dem herkömmlichen Siebdruckverfahren mehrere Vorteile. Zum einen werden die sehr teuren Druckschablonen, die beim Siebdruckverfahren eingesetzt werden und auch nur eine kurze Standzeit haben, nicht mehr benötigt. Man spart somit Kosten wegen Wegfalls der Siebe, des Transports dieser und der entsprechenden Pflege, da das aufwendige Reinigen dieser nicht benötigten Siebe entfällt und damit auch die Umwelt entlastet wird. Die Rüstzeit zur Durchführung des Verfahrens gemäß der Erfindung ist im Vergleich zum Siebdruckverfahren erheblich kürzer. Fehldrucke sind praktisch ausgeschlossen. Der Personaleinsatz, insbesondere während der Bestrahlung mit dem mindestens einen Hochenergiestrahl, ist reduziert. Vorteilhaft ist ferner, dass Motive mit verschiedenen Farbtönen fehlerfrei möglich sind, die exakt und ohne Versatz aufeinanderpassen.

Bei einem alternativen Verfahren zum Erzeugen von Farb-Informationen, z.B. Motiven, auf einem Träger, insbesondere aus Glas, geht man in vorteilhafter Weise anders vor. Es wird eine keramische Farbe auf eine Seite, insbesondere auf die Vorderseite, des Trägers vollflächig aufgetragen. Nach dem Trocknen der Farbe wird mindestens ein Hochenergiestrahl, z.B. Laserstrahl, auf die Farbe gerichtet und damit bei einer Arbeitstemperatur von z.B. etwa 400°C bis 500°C die vorgegebene Information auf dem Träger fixiert. Danach werden die übrigen, nicht vom Hochenergiestrahl getroffenen Farbbereiche entfernt, z.B. durch Abwaschen. Die übrigen, die Information bildenden Farbbereiche, die nicht zu entfernen sind, bleiben dabei auf dem Träger haften, wobei diese Haftverbindung jedoch nicht kratzfest ist. In vorteilhafter Weise kann man hierbei die Farbe auf der Vorderseite des Trägers auftragen und den mindestens einen Hochenergiestrahl auf die Vorderseite des Trägers oder die Oberseite der Farbschicht richten. Nach dem Entfernen der übrigen, nicht vom Hochenergiestrahl getroffenen Farbbereiche, z.B. durch Abwaschen, wird in vorteilhafter Weise die auf dem Träger verbliebene Farbe mittels Wärmebehandlung eingebrannt. In vorteilhafter Weise erfolgt dadurch das Härten dieser Farbe.

Gegenstand der Erfindung ist ferner eine Einrichtung zum Erzeugen von Farb-Informationen, z. B. Motiven, auf einem Träger, insbesondere aus Glas, mit den weiteren Merkmalen im Anspruch 18. Weitere Erfindungsmerkmale und Ausgestaltungen dieser Einrichtung enthalten die Ansprüche 19 bis 21. Eine solche Einrichtung ist relativ kostengünstig, leicht zu handhaben und vermeidet im Vergleich zum Siebdruckverfahren die dafür notwendigen aufwendigen Elemente.

Weitere Einzelheiten und Vorteile der Erfindung ergeben sich aus der nachfolgenden Beschreibung.

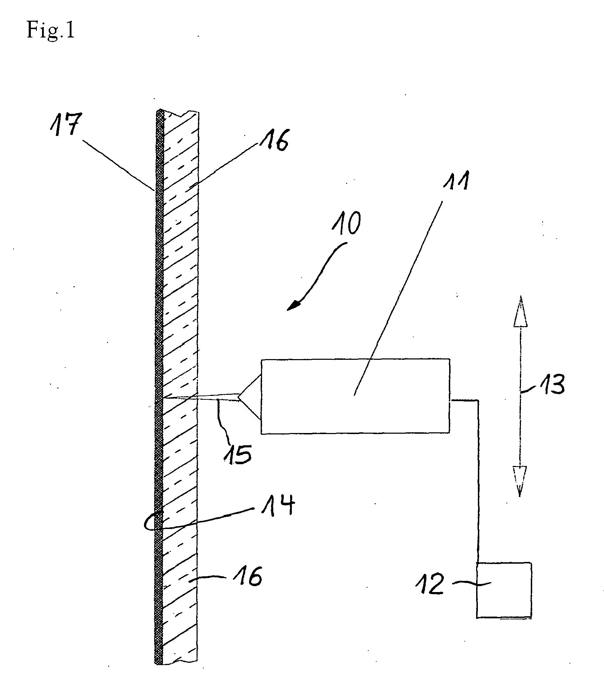

Der vollständige Wortlaut der Ansprüche ist vorstehend allein zur Vermeidung unnötiger Wiederholungen nicht wiedergegeben, sondern statt dessen lediglich durch Nennung der Anspruchsnummern darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus der Zeichnung entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand eines in der Zeichnung gezeigten Ausführungsbeispieles näher erläutert. Die Zeichnung zeigt eine schematische, teilweise geschnittene Ansicht einer Einrichtung zum Erzeugen von Farb-Informationen, z. B. Motiven, auf einem Träger, insbesondere aus Glas.

Im Einzelnen weist die Einrichtung 10 mindestens einen Hochenergiestrahlerzeuger in Form eines Laserstrahlerzeugers 11 auf, der mittels einer nur schematisch angedeuteten Betätigungs- und Steuereinrichtung 12 in Richtung des vertikalen Pfeiles 13 und bedarfsweise quer dazu gesteuert bewegt wird derart, dass dessen auf eine Fläche 14 fokussierter Laserstrahl 15 auf diese Fläche 14 die gewünschten Informationen, z. B. Motive, schreibt.

Bei dieser Fläche 14 handelt es sich um diejenige Seite eines Trägers 16, insbesondere aus Glas, die dem Laserstrahlerzeuger 11 abgewandt ist. Auf diesen Träger 16, insbesondere aus Glas, ist auf die Fläche 14 eine keramische Farbe in Form mindestens einer Farbschicht 17 vollflächig aufgetragen worden, z. B. durch Aufwalzen oder Aufdrucken auf die Fläche 14 des Trägers 16. Nach diesem Auftragen ist die Farbe 17 mittels Wärmebeaufschlagung, insbesondere Infrarotbeaufschlagung, die in einem Infrarot-Durchlaufofen geschieht, getrocknet worden. In diesem Zustand nach dem Trocknen der Farbe 17 befindet sich der Träger 16, der in der Zeichnung in vertikaler oder horizontaler Ausrichtung in geeigneter Weise gehalten ist derart, dass die rückseitige Fläche 14 z. B. etwa rechtwinklig zum Laserstrahl 15 ausgerichtet ist. Der Laserstrahl 15 wird durch den Träger 16 hindurch auf die Farbe 17 gerichtet, wodurch an der jeweils fokussierten Stelle die Farbe 17 entsprechend der jeweils zu erzeugenden Information teilweise entfernt wird. Als Laserstrahlerzeuger 11 und Laserstrahl 15 kommt ein solcher zur Anwendung, der zerstörungsfrei durch den Träger 16 aus Glas hindurchgeht, also Glas nicht erkennt. Durch entsprechende Steuerung und Bewegung des Laserstrahls 15 oder des Laserstrahlerzeugers 11 mittels der Einrichtung 12 lassen sich als Farbinformationen beliebige Motive mit verschiedenen Farbtönen herstellen, die exakt aufeinanderpassen ohne etwaigen Versatz zueinander. Die Entschichtung der Farbe 17 auf der rückseitigen Fläche 14 im Bereich des jeweiligen Fokus des Laserstrahls 15 geschieht durch Absprengen, wodurch statt Farbe Pulver anfällt. Dieses Pulver wird mittels nicht weiter gezeigter Vorrichtungen entfernt, z. B. mittels eines Drucklufterzeugers abgeblasen oder mittels eines Sauglufterzeugers abgesaugt.

Nachdem in beschriebener Weise gewünschte Farb-Informationen, z. B. Motive, auf der rückseitigen Fläche 14 des Trägers 16 durch dortiges zumindest teilweises Entfernen der Farbe 17 hergestellt worden sind, wird die auf dem Träger 16 verbliebene Farbe darauf fixiert. Dies geschieht durch Wärmebeaufschlagung, wobei die Farbe 17 eingebrannt wird durch Einschmelzen und Härten. Zu diesem Zweck wird der Träger 16 in einen Härteofen verbracht, in dem der Träger 16 einer Hitzeeinwirkung, z. B. bei etwa 630°C, unterworfen wird. Anschließend wird der Träger 16, z. B. mit kalter Luft, abgekühlt.

Der Träger 16 ist beim gezeigten Ausführungsbeispiel ebenflächig. Er kann an nicht gezeigter Stelle auch gebogene Bereiche aufweisen, und zwar sowohl konvex als auch konkav gekrümmte Bereiche. Statt dessen kann auch der gesamte Träger entsprechend gebogen sein. Das Verfahren gemäß der Erfindung und die Einrichtung 10 zur Durchführung dieses Verfahrens ermöglichen somit das Erzeugen von Farb-Informationen auch auf gebogenen Flächen des Trägers 16, was beim bekannten Siebdruckverfahren nicht möglich ist.

Bei einer anderen alternativen Verfahrensweise zum Erzeugen von Farb-Informationen, z.B. Motiven, auf einem Träger 16, vorzugsweise aus Glas, wird auf die in der Zeichnung rechts befindliche Vorderseite des Trägers 16 eine keramische Farbe 17 vollflächig aufgetragen. Nach dem Trocknen der Farbe 17 richtet man mindestens einen Hochenergiestrahl 15, insbesondere Laserstrahl, auf die Farbe 17. Dies kann bei einer Arbeitstemperatur von z.B. etwa 400°C bis 500°C geschehen. Dadurch wird die vorgegebene Information auf die in der Zeichnung rechts befindliche Vorderseite des Trägers 16 aufgebracht und unter Hitzeeinwirkung zumindest soweit fixiert, dass die Information auf dem Träger 16 haften bleibt. Danach werden die übrigen, nicht vom Hochenergiestrahl 15 getroffenen Farbbereiche entfernt, z.B. durch Abwaschen. In.vorteilhafter Weise wird bei diesem alternativen Verfahren der mindestens eine Hochenergiestrahl 15, insbesondere Laserstrahl, auf die in der Zeichnung rechte Vorderseite des Trägers 16 oder die dort rechts befindliche Oberseite der Schicht der Farbe 17 gerichtet. Nach dem Abwaschen wird die auf dem Träger 16 verbliebene Farbe 17 mittels Wärmebehandlung eingebrannt und gehärtet. Dieses alternative Verfahren ist besonders einfach und gestaltet sich kostengünstig, um Farb-informationen schnell, einfach, sicher und reproduzierbar auf einem Träger 16, der insbesondere aus Glas besteht, bleibend aufzubringen.

## Patentansprüche

1. Verfahren zum Erzeugen von Farb-Informationen, z.B. Motiven, auf einem Träger (16), insbesondere aus Glas, bei dem eine keramische Farbe (17) auf eine Seite (14) des Trägers (16) vollflächig aufgetragen wird,
**dadurch gekennzeichnet,**
**dass** man nach dem Trocknen der Farbe (17) mindestens einen Hochenergiestrahl (15) auf die Farbe (17) richtet und damit die Farbe (17) entsprechend der zu erzeugenden Information teilweise entfernt.

2. Verfahren nach Anspruch 1,
**dadurch gekennzeichnet,**
**dass** man den mindestens einen Hochenergiestrahl (15) durch den Träger (16) hindurch auf dessen die Farbe (17) tragende Seite (14) richtet.

3. Verfahren nach Anspruch 1 oder 2,
**dadurch gekennzeichnet,**
**dass** man als Hochenergiestrahl (15) zumindest einen Energiestrahl eines Lasers (11) auf die Farbe (17) richtet.

4. Verfahren nach Anspruch 3,
**dadurch gekennzeichnet,**
**dass** man als mindestens einen Laserstrahl (15) einen solchen verwendet, der durch den Träger (16) zerstörungsfrei hindurchgeht, insbesondere Glas nicht erkennt.

5. Verfahren nach einem der Ansprüche 1 bis 4,
**dadurch gekennzeichnet ,**
**dass** man die Farbe (17) durch Aufwalzen auf den Träger (16) aufträgt.

6. Verfahren nach einem der Ansprüche 1 bis 5,
**dadurch gekennzeichnet ,**
**dass** man die aufgetragene Farbe (17) vor der teilweisen Entfernung mittels des mindestens einen Hochenergiestrahls (15) mittels Wärmebeaufschlagung, insbesondere Infrarotbeaufschlagung, trocknet.

7. Verfahren nach einem der Ansprüche 1 bis 6,
**dadurch gekennzeichnet,**
**dass** man Farb-Informationen aus mehreren Farbschichten (17) herstellt.

8. Verfahren nach einem der Ansprüche 1 bis 7,
**dadurch gekennzeichnet ,**
**dass** man als Farb-Informationen beliebige Motive mit verschiedenen Farbtönen, die ohne Versatz aufeinander passen, herstellt.

9. Verfahren nach einem der Ansprüche 1 bis 8,
**dadurch gekennzeichnet,**
**dass** man die teilweise Entfernung der Farbe (17) durch Entschichten dieser mittels des mindestens einen Hochenergiestrahls (15) bewirkt.

10. Verfahren nach einem der Ansprüche 1 bis 9,
**dadurch gekennzeichnet,**
**dass** man die teilweise Entfernung der Farbe (17) durch Absprengen dieser mittels des mindestens einen Hochenergiestrahls (15) bewirkt.

11. Verfahren nach einem der Ansprüche 1 bis 10,
**dadurch gekennzeichnet,**
**dass** die teilweise entfernte Farbe als Pulver anfällt und dass man dieses Pulver durch Abblasen, Absaugen od.dgl. entfernt.

12. Verfahren nach einem der Ansprüche 1 bis 11,
**dadurch gekennzeichnet,**
**dass** man nach der teilweisen Entfernung von Farbe (17) die auf dem Träger (16) verbliebene Farbe mittels Wärmebeaufschlagung einbrennt.

13. Verfahren nach Anspruch 12,
**dadurch gekennzeichnet,**
**dass** man das Einbrennen durch Einschmelzen und Härten bewirkt.

14. Verfahren nach einem der Ansprüche 1 bis 13,
**dadurch gekennzeichnet,**
**dass** der Träger (16) ebenflächig und/oder gebogen ist.

15. Verfahren zum Erzeugen von Farb-Informationen, z.B. Motiven, auf einem Träger (16), insbesondere aus Glas, bei dem eine keramische Farbe (17) auf eine Seite (14) des Trägers (16) vollflächig aufgetragen wird, insbesondere mit den Merkmalen eines oder mehrerer vorangehender Ansprüche,
**dadurch gekennzeichnet,**
**dass** man nach dem Trocknen der Farbe (17) mindestens einen Hochenergiestrahl (15) auf die Farbe (17) richtet und damit bei einer Arbeitstemperatur von z.B. etwa 400°C bis 500°C die vorgegebene Information auf dem Träger (16) fixiert und dass man danach die übrigen, nicht vom Hochenergiestrahl (15) getroffenen Farbbereiche entfernt, z.B. durch Abwaschen.

16. Verfahren nach Anspruch 15,
**dadurch gekennzeichnet,**
**dass** man die Farbe (17) auf die Vorderseite des Trägers (16) aufträgt und den mindestens einen Hochenergiestrahl (15) auf die Vorderseite des Trägers (16) oder die Oberseite der Farbschicht richtet.

17. Verfahren nach Anspruch 15 oder 16,
**dadurch gekennzeichnet,**
**dass** man die auf dem Träger (16) verbliebene Farbe (17) mittels Wärmebehandlung einbrennt.

18. Einrichtung zum Erzeugen von Farb-Informationen, z. B. Motiven, auf einem Träger (16), insbesondere aus Glas, wobei eine keramische Farbe (17) auf eine Seite (14) des Trägers (16) vollflächig aufgetragen wird, insbesondere zur Durchführung des Verfahrens nach Anspruch 1,
**gekennzeichnet durch**
mindestens einen Hochenergiestrahlerzeuger (11), insbesondere Laserstrahlerzeuger, dessen Energiestrahl (15) auf die Farbe (17) entsprechend der zu erzeugenden Farb-Information gerichtet wird und **dadurch** die Farbe (17) entsprechend der zu erzeugenden Information teilweise entfernt wird.

19. Einrichtung nach Anspruch 18,
**dadurch gekennzeichnet,**
**dass** der Hochenergiestrahlerzeuger (11) auf derjenigen Seite des Trägers (16) angeordnet ist, die der die Farbe (17) tragenden Seite (14) gegenüberliegt, und von dieser Seite durch den Träger (16) hindurch wirksam ist.

20. Einrichtung nach Anspruch 18 oder 19,
**gekennzeichnet durch**
eine Infrarottrocknungseinrichtung zum Trocknen der auf den Träger (16) aufgetragenen Farbe (17) vor deren teilweiser Entfernung.

21. Einrichtung nach einem der Ansprüche 18 bis 20,
**gekennzeichnet durch**
eine Wärmebehandlungseinrichtung, z. B. einen Härteofen, zum Einbrennen der auf dem Träger (16) nach der teilweisen Entfernung verbliebenen Farbe (17) **durch** Hitzeeinwirkung, z. B. bei etwa 630° C.
